# EUROPÄISCHE PATENTSCHRIFT

(11) **EP 0 518 309 B1**
(45) Veröffentlichungstag und Bekanntmachung des Hinweises auf die Patenterteilung: **25.09.1996**
(21) Anmeldenummer: 92109803.4
(22) Anmeldetag: 11.06.1992
(51) Int. Cl.: F42C 13/04, F42C 13/06, G01S 13/86

(54) **Sensoreinrichtung für insbesondere eine Landmine**
Sensing device, in particular for landmines
Dispositif capteur, notamment pour mine terrestre

(30) Priorität: 14.06.1991 DE 4119612; 27.06.1991 DE 4121274
(43) Veröffentlichungstag der Anmeldung: 16.12.1992
(73) Patentinhaber: DIEHL GMBH & CO., D-90478 Nürnberg (DE)
(72) Erfinder: Dittmann, Frank-Lutz, W-8501 Eckental/Eschenau (DE); Babel, Wolfgang, Dr., W-8505 Röthenbach (DE); Westphal, Robert, Dr., W-8500 Nürnberg (DE)

(56) Entgegenhaltungen:
- EP-A- 0 058 032
- DE-A- 3 543 769
- DE-C- 1 811 046

## Beschreibung

Die Erfindung betrifft eine Sensoreinrichtung gemäß dem Oberbegriff des Anspruches 1.

Eine derartige Sensoreinrichtung ist als FM-CW-Radar mit einer Trägerfrequenz im Bereich von 1 bis 2 GHz aus der EP 0 058 032 A bekannt. Sie weist am oberen Ende eines säulenförmigen, manuell ins zu überwachende Gelände verbringbaren, Gerätes in typisch etwa einem Meter über Grund eine ungerichtete Antenne auf. Über diese wird elektromagnetische Energie rundum abgestrahlt und die dopplerbehaftete Reflexionsenergie von einem sich bewegenden Objekte sowohl in unmittelbarer Sichtlinie wie auch über einen Bodenreflex wieder aufgenommen. Die empfangsseitige Überlagerung dieser beiden dann gegeneinander phasenverschobenen Zielechos führt bei einer bestimmten Dopplerseitenband-Auswertung zu entfernungsabhängiger Interferenz-Auslöschung und eröffnet dadurch die Möglichkeit, je nach den Aufstellgegebenheiten der Antenne einen bestimmten Detektionsradius für hinreichend deutlich dopplerbehaftete Zielechos zu definieren. Das Prinzip dieses Dopplerradarsensors beruht also auf der Auswertung zweier ungestörter Funkverbindungen zwischen der Antenne und dem reflektierenden Zielobjekt, von denen die eine eine unmittelbare Sichtverbindung und die andere eine aufgrund der Bodenreflexion nur mittelbare Sichtverbindung ist. Deshalb ist ein solcher Radarsensor dann nicht einsetzbar, wenn das Zielobjekt - etwa aufgrund der den Sensor umgebenden Geländegegebenheiten - von der Antenne nicht in direkter Sichtlinie wahrgenommen werden kann. Das aber ist sehr häufig der Fall beim Ausbringen von Minensensoren in unwegsamem Gelände bzw. in sichtgeschützter Position, weil aus handhabungstechnischen Gründen und zur Vermeidung einer zu hohen Verratswahrscheinlichkeit die Antenne nicht bis über die Kammlinie umgebender Hügel oder über den Geländebewuchs hinaus verlängert werden kann, um aus der Deckung heraus das ansonsten im Sichtschatten gelegene Aufmarschgelände zu erfassen. Moderne Minen gegen Landfahrzeuge und niedrigfliegende Luftfahrzeuge werden nämlich nicht mehr unmittelbar in der zu erwartenden Ziel-Bewegungsbahn ausgelegt, sondern abseits davon, um über eine größere Distanz von der Seite her oder von oben und dadurch zwar aus der Deckung heraus aber doch mit größerer Effektivität im Ziel zu wirken, wie insbesondere in der GB 2 174 482 A für eine Landmine mit Submunitions-Wirkmechanismus näher beschrieben. Bei ihr initiiert ein Wecksensor, der etwa gemäß EP 0 375 872 A1 ausgelegt sein kann, das Abheben des Wirkkörpers aus einem stationär zurückbleibenden Startgerät, woraufhin der Wirkkörper am Fallschirm hängend wieder ins Zielgebiet absteigt und dieses mit einem Suchzünder-Sensor spiralförmig-einengend absucht. Bei Erfassen des zu bekämpfenden Zielobjektes wird vom Suchzünder der Gefechtskopf mit projektilbildender Hohlladungs-Einlage in Richtung auf das gerade erfaßte Zielobjekt ausgelöst. Problematisch kann bei solcher Bekämpfungsstrategie allerdings sein, daß für die Kinematik ab Ansprechen des Sensors, also für den Aufstieg aus dem Startgerät und für den daran sich anschließenden gebremsten rotierenden Wieder-Abstieg ins Zielgebiet, eine nicht beliebig verkürzbare Zeitspanne verstreicht. Dadurch ist keine Wirkung im Zielobjekt erzielbar, wenn dieses z. B. nur die Peripherie des Erfassungsbereiches des Sensors berührt und sich bereits wieder aus dem vom Wirkkörper akquirierbaren Bereich entfernt hat, wenn dieser Wirkkörper nach Durchgang durch sein Aufstiegsapogäum schließlich mit eingeschaltetem Suchzünder ins Zielgebiet absteigt. Deshalb sollte das Abheben aus dem Startgerät überhaupt nur von einem Zielobjekt initiiert werden, wenn hinreichend sicher ist, daß der Suchzünder-Wirkkörper bei seinem Abstieg dieses Zielobjekt auch tatsächlich noch in seinem Wirkbereich (und in diesem möglichst zentral) erfassen kann. Dagegen soll der Wirkkörper in seiner Funktionsbereitschaft verharren, also noch nicht aufsteigen, wenn aufgrund der Zielbewegung die Wahrscheinlichkeit zu gering ist, daß das vom Sensor aktuell erfaßte Zielobjekt auch tatsächlich erfolgversprechend bekämpft werden kann.

Dieses Bekämpfungskonzept erscheint effektiver, als dasjenige nach DE 35 43 769 A1, bei welchem akustische Wecksensoren veranlassen, daß eine Radarantenne unter Auswertung der direkten Sichtlinien-Zielauffassung einen kardanisch aufgehängten Wirkkörper diesem Ziel nachführt und nach Unterschreiben eines Mindestabstands eine projektilbildende Ladung zündet, weil ein solcher Mechanismus aus kinematischen Gründen nur in einem relativ kleinen vertikalen Raumausschnitt mit einem in relativ großer Höhe über Grund operierenden Zielobjekt arbeitet, wegen des Erfordernisses der direkten Radar-Sichtlinie für das Nachrichten und die Zündauslösung aber nicht aus der Deckung heraus gegen flach operierende Luftziele oder gegen Landziele.

Das gilt sinngemäß auch für die Funktion der Zündauslösung einer Richtmine nach DE 18 11 046 C1, die bei Annäherung eines durch das Geräuschspektrum charakterisierten zu bekämpfenden Zielobjektes in Funktionsbereitschaft gesetzt wird und ihre Gefechtsladung zündet, sobald dieses Zielobjekt in die direkte Sichtlinie einer Infrarot-Reflexlichtschranke eintritt.

Die Minen eines modernen intelligenten Sperrsystems sind mit Sensoreinrichtungen auszustatten, die für eine effektive Bekämpfung eines ins Sperrgebiet eindringenden potentiellen Zielobjekts dieses detektieren, lokalisieren und möglichst auch klassifizieren können müssen. Dabei soll das Zielobjekt auch dann noch in einigen hundert Metern Entfernung erfaßt werden, wenn aufgrund von künstlichen oder natürlichen Hindernissen keine direkte (optische) Sichtlinie zwischen der Sensoreinrichtung und dem Zielobjekt gegeben ist. Das läßt sich grundsätzlich mittels eines sog. None Line of Sight Radar realisieren, das auf so niedrigen Frequenzen arbeitet, daß diese infolge Beugungserscheinungen an Unebenheiten weitgehend eine Wellenausbreitung entlang des Bodens und damit über die optische Schattengrenze hinaus zeigen und dementsprechend auch Signale von verdeckten Reflektoren an die Sende-Empfangs-Einrichtung rückliefern. Um das Eindringen von potentiellen Zielobjekten in das überwachte Sperrgebiet leichter erkennen zu können, wird - auch wenn keine Zielobjekt-Annäherung von einem Wecksensor signalisiert wird - von Zeit zu Zeit die Hochfrequenz-Energieabstrahlung aktiviert, um die umgebende Geländesituation (mit ihren ortsbedingt wenigstens quasi-stationär vorhandenen und natürlichen Reflektoren) zu erfassen und abzuspeichern; denn aus einem Vergleich mit der so gewonnenen Geländeinformation läßt sich das Eindringen eines Fremdkörpers und damit eines potentiellen Zielobjektes leichter erkennen. Die Amplitudenauswertung der reflektierten Empfangsenergie erlaubt eine gewisse Zielklassifikation. Mit Reflexions-Auswertung in sogenannten Zeitfenstern, also entfernungsabhängig, ergibt sich auch eine Mehrzielauflösung.

Für eine wirkungsvolle Mehrziel-Bekämpfung, auch durch wechselseitige autonome Aufgaben-Zuweisungen zwischen Minen, in deren Wirkbereiche Zielobjekte eingedrungen sind, sind zusätzlich Richtungsinformationen erforderlich, um die Zielbewegungen analysieren und daraus abschätzen zu können, ob ein interessierendes Zielobjekt sich voraussichtlich lange genug im oder über einem Geländebereich aufhält, in dem es von der Mine, die gerade aktiv ist, und ggf. nachgerichtet werden kann, mit hinreichender Erfolgsaussicht bekämpft werden kann. Während zwar der elektromagnetische Sensor eine gute Entfernungsauflösung liefert, ist zur Bestimmung der Zielrichtung erhöhter konstruktiver und signalverarbeitungstechnischer Aufwand erforderlich. Dazu kann eine Antennengruppe fungieren, mittels derer zugleich im Wege von Antennenumschaltungen eine künstliche Dopplerinformation gewinnbar ist, um auch bei momentan stillstehenden oder sich nur langsam bewegenden Zielobjekten eine brauchbare Dopplerinformation zu erzielen. Eine größere Richtungs-Peilgenauigkeit neben der Zielklassifizierung läßt sich jedoch mittels einer größeren passiven Peilbasis erreichen, wie sie durch die Anordnung von wenigstens drei Mikrophonen um die Mine herum oder in gewissem Abstand von der Mine aufspannbar ist. Dabei weist eine solche passive akustische Peilbasis gegenüber etwa der aktiven Hochfrequenzpeilung den Vorteil auf, nicht vom Zielobjekt aus geortet werden und somit ohne Verratsgefahr nach einer Wecksensor-Initialisierung ständig in Betrieb bleiben zu können. Für eine Entfernungsauflösung zur Mehrzielerkennung müßte eine größere passive Meßbasis ausgewertet werden, weshalb diese Auswertung bspw. dem aktiven Sensor (Radar) zugeordnet wird.

Ein Einmessen des passiven Systems, d. h. der Basiskonfiguration der Mikrofone in bezug zueinander und in bezug zum Wirkkörper, ist nicht erforderlich, wenn die Konfiguration der Mikrofone in bezug zueinander und in bezug auf den Wirkkörper definiert ist. Wenn jedoch die Basiskonfiguration konstruktiv zu sehr eingeschränkt ist, kann auch jedes Mikrofon mittels eines flexiblen Fesselelementes bzw. Verbindungskabels mit dem Wirkkörper, aus dem es zu gegebener Zeit herausgeschossen wird, verbunden sein. So ist es möglich, eine Basiskonfiguration mit entsprechend großen Abmessungen zu realisieren, um ein autonomes Einmessen der Konfiguration der Mikrofone zu ermöglichen. Jedenfalls ergibt die Kombination aus stets betriebsbereiter passiver Peilbasis mit Weckfunktion und nur vorübergehend zugeschaltetem aktivem NLOS-Entfernungssensor die über den bloßen Summeneffekt hinausgehende Detektionsleitung eines vielseitigen aber schwer täuschbaren und aus verfügbaren Komponenten erstellbaren System zur Zielverfolgung für den wirkungsvollen Einsatz moderner interaktiver Verteidigungssysteme mit Abstandsminen für Side- und Top-Attack.

Die eingangs angedentete Aufgabe ist bei einer Sensoreinrichtung gattungsgemäßer Art dadurch gelöst, daß sie gemäß dem kennzeichnenden Teil des Anspruches 1 ausgelegt ist.

Zusätzliche Alternativen und Weiterbildungen sowie weitere Merkmale und Vorteile der Erfindung ergeben sich aus den weiteren Ansprüchen und, auch unter Berücksichtigung der Darlegungen in der Zusammenfassung, aus nachstehender Beschreibung von in der Zeichnung unter Beschränkung auf das Wesentliche stark abstrahiert und nicht maßstabsgerecht skizzierten bevorzugten Realisierungsbeispielen zur erfindungsgemäßen Lösung. Es zeigt:

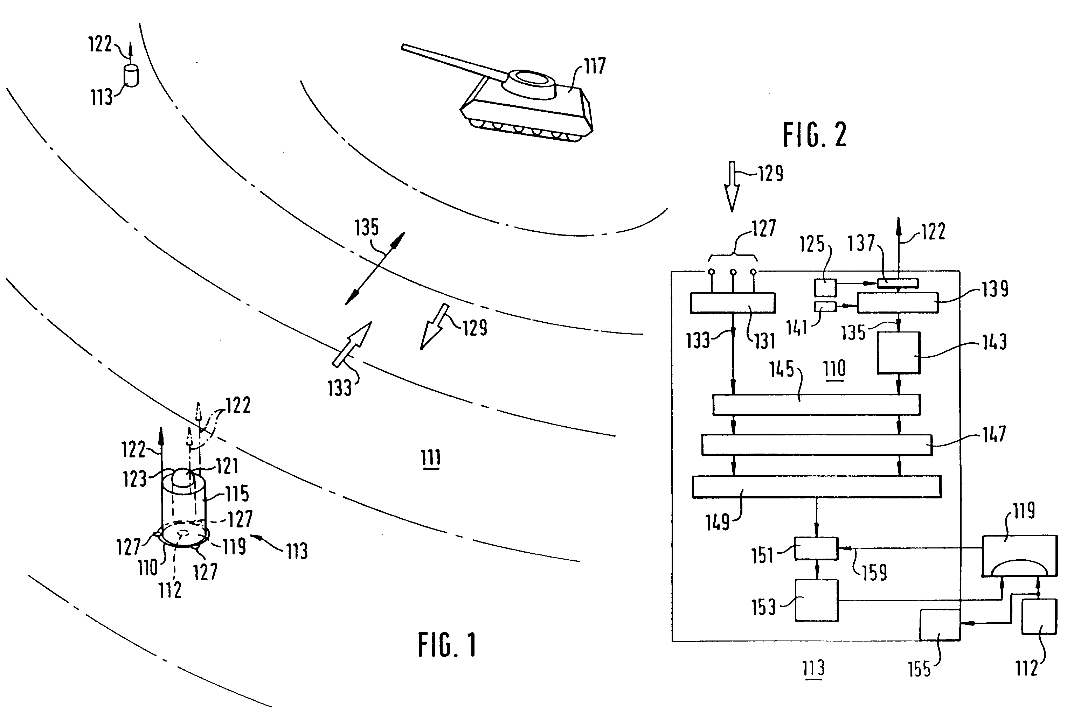

- Fig. 1: eine Szenen-Skizze mit einem den Wirkbereich der Mine passierenden Zielobjekt,
- Fig. 2: in Blockschaltbild-Darstellung die Signalverarbeitung in der Sensoreinrichtung der Mine,
- Fig. 3: eine Ansicht einer ersten Ausführungsform einer akustischen Peilbasis von oben, wobei die Sensoreinrichtung mit durchgezogenen Linien in der inaktiven Warte- bzw. Lauerstellung und mit dünnen strichlierten Linien in der aktiven Stellung angedeutet ist,
- Fig. 4: eine Seitenansicht des abschnittsweise gezeichneten Wirkkörpers mit einem sich vom Wirkkörper weg aufrollenden Federstahlband, an dessen vom Wirkkörper entferntem Endabschnitt ein Mikrofon befestigt ist,
- Fig. 5: einen Schnitt entlang der Schnittlinie III-III in Figur 3 durch ein in einem Gehäuse angeordnetes Mikrofon, wobei das Gehäuse von einem auf das Gehäuse aufgewickelten Federstahlband umschlossen ist, das Federstahlband mittels einer Verbzw. Entriegelungseinrichtung im um das Gehäuse herumgewundenen Zustand gehalten wird, und der Wirkkörper abschnittsweise in einer Seitenansicht gezeichnet ist,
- Fig. 6: einen Schnitt entlang der Schnittlinie IV-IV in Figur 5,
- Fig. 7: eine zweite Ausführungsform der Sensoreinrichtung in Blickrichtung von oben, bei welcher die Mikrofone vom Wirkkörper ausgestoßen und quasi wahllos beabstandet sind, und
- Fig. 8: eine schematische Darstellung des Wirkungsprinzips zur Peilung eines Zieles mit Hilfe von vier Mikrofonen, die aus einem Wirkkörper ausgestoßen worden sind und mit Hilfe eines fünften am Wirkkörper vorgesehenen Mikrofons, wobei das Sensor- d. h. Mikrofonsystem zerst die grobe Richtung des Zieles zu erkennen in der Lage ist und danach aufgrund dieser Grobinformation die geeignete Sensor- bzw. Mikrofonverknüpfung und Auswertestrategie festlegt, um das Ziel genau detektieren zu können.

Die ins Sperrgebiet 111 verbrachte Mine 113 kann von Pionieren handverlegt oder mittels Verbringungseinrichtungen ausgeworfen sein. In letzterem Falle ist sie mit einer Aufrichteinrichtung ausgestattet, wie sie etwa in der US-PS 4 922 824 näher beschrieben ist, um eine möglichst vertikale Ausrichtung des Minen-Startgerätes 115 zu erzielen. Zur Abwehr eines ins Sperrgebiet 111 eindringenden Zielobjektes 117 wird eine Antriebseinrichtung 119 - etwa ein Treibsatz oder ein Raketentriebwerk - initiiert und dadurch der Minen-Wirkkörper 121 aus dem Startgerät 115 hinaus in den Luftraum über das Sperrgebiet 111 verbracht. Von dort steigt der Wirkkörper 121 fallschirmgebremst wieder ab, um nach Art von Suchzünder-Submunition das Gelände abzutasten und seinen Gefechtskopf 123 mit projektilbildender Hohlladungs-Belegung zu zünden, sobald der Suchzünder das zu bekämpfende Zielobjekt 117 in Wirkrichtung voraus erfaßt, wie etwa in der GB 2 174 482 A näher beschrieben.

Allerdings benötigt die Kinematik des Aufsteigens des Wirkkörpers 121, seiner Bewegungsumkehr und des Aufspannens des Fallschirmsystems für den gebremst rotierenden Abstieg ins Sperrgebiet eine gewisse Zeitspanne, während andererseits der maximale Wirkradius im Sperrgebiet 111 durch die Wirkdistanz des Gefechtskopfes 123 und die Neigung des Suchzünders beim spiralförmigen Abtasten des Zielgebietes begrenzt ist. Wenn das Zielobjekt 117, das den Aufstieg des Wirkkörpers 121 auslöste, sich nicht auf die Mine 113 zu bewegt, sondern den Wirkbereich beispielsweise nur längs einer abgelegenen Sekante kreuzt, dann kann das Zielobjekt 117 den Minen-Wirkbereich schon wieder verlassen haben, ehe der Wirkkörper 121 in seine funktionsbereite Abstiegsphase übergetreten ist; und mangels Treffers im Zielobjekt 117 war die Auslösung der Mine 113 vergebens.

Deshalb soll die Antriebseinrichtung 119 nicht schon allein deshalb initiiert werden, weil ein Wecksensor 112, etwa ein auf die von einem Kettenfahrzeug ausgelösten Bodenschwingungen ansprechender Seismik-Sensor, die bloße Annäherung eines potentiellen Zielobjektes 117 meldet. Statt dessen ist eine Sensoreinrichtung 110 vorgesehen, die ein Radar 125 enthält, mittels dessen nach dem Ausbringen der Mine 113 zunächst deren Gelände-Umgebung aufgenommen wird, um das Radar 125 dann zunächst wieder abzuschalten, damit es die Position der Mine 113 nicht verrät. Diese Umgebungs-Adaption kann in schaltungstechnisch vorgegebenen Zeitabständen wiederholt, also aufgefrischt werden. Im übrigen aber wird die Sensoreinrichtung 110 erst wieder vom Wecksensor 112 eingeschaltet, um nun im Vergleich zur jüngsten abgespeicherten Umgebungsinformation die Entfernung und Bewegungsrichtung des potentiellen Zielobjektes 117 im Rückstrahl-Ortungsverfahren zu ermitteln. Dabei ermöglicht der Szenen-Unterschied zum zuvor erfaßten Umfeld noch ohne eingedrungenes Zielobjekt 117 eine erste Zielanalyse und die Zielecho-Amplitudeninformation eine gewisse Zielklassifikation, um den Wirkkörper 121 nicht gegen Scheinziele oder gegen solche Objekte einzusetzen, die eine Bekämpfung nicht lohnen, sondern für wirklich abzuwehrende Zielobjekte 117 bereitzuhalten.

Allerdings erhebt sich die Mine 113 nicht wesentlich über den Untergrund, so daß in einem hügeligen Sperrgebiet 111, oder über künstliche bzw. natürliche Hindernisse wie Bauten oder Anpflanzungen hinweg, eine radartypische direkte Sichtlinien-Verbindung von der Sensoreinrichtung 110 zum Zielobjekt 117 nicht sichergestellt werden kann. Deshalb wird von einer aus dem Startgerät 115 ausfahrbaren Antenne 122 eine Kugelwelle relativ niedriger Sendefrequenz (in der Größenordnung einiger hundert MHz) abgestrahlt, weil diese die Eigenschaft hat, der Geländeformation relativ gut zu folgen und somit Ziel-Echoinformationen auch ohne Sichtverbindung zum Zielobjekt 117 zu liefern.

Ein solches sogenanntes NLOS-Radar 125 ist in der eigenen älteren Anmeldung mit der Priorität vom 31.05.1991 (P 41 17 873.4) ''Sensoreinrichtung zur Auslösung eines Wirkkörpers'' schaltungstechnisch näher beschrieben.

Zur weiteren Optimierung der Informationen über das Zielobjekt 117 kann eine Dopplerauswertung der empfangenen Zielreflexionen erfolgen. Diese Auswertung ist allerdings nicht nur bei langsam sich bewegenden Zielobjekten 117 recht aufwendig und fehleranfällig, sondern auch deshalb, weil in der Regel keine Sichtlinien-Reflexe empfangen werden können, sondern elektromagnetische Strahlenenergie ausgewertet werden muß, die bei der Ausbreitung längs des Untergrundes zusätzlich stark beeinflußt ist. Zweckmäßiger ist es deshalb, aus der Mine 113 wenigstens zwei weitere Stab-Antennen 122 auszufahren und dadurch eine Mehrpunkt-Peilbasis aufzubauen, die eine weniger gestörte Zielinformation erbringt, indem (gewissermaßen zur Erzielung einer künstlichen Dopplerwirkung) der Empfang zwischen diesen Antennen 122 gruppenweise umgeschaltet wird.

Zugleich kann diese Peilbasis auch der Richtungspeilung zum erfaßten Zielobjekt 117 dienen, um die Mehrzielauflösung zu verbessern und zusätzliche Bewegungskoordinaten über das erfaßte Zielobjekt 117 zu gewinnen. Eine Richtungsinformation 133 ist insbesondere auch dann von Interesse, wenn sich überlagernde Sperrgebiete 111 mehrerer Minen 113 eines Minenfeldes vorliegen und diese Minen 113 untereinander in Informationsaustausch stehen, wofür die Radar-Antennen 122 in den Ortungspausen herangezogen werden können. Wenn vom Standort einer Mine 113 aus durch Funkkontakt-Abfrage zwischen benachbarten Minen 113 festgestellt wird, daß in Richtung auf das erfaßte Zielobjekt 117 zu eine noch intakte weitere Mine 113 mit hinsichtlich der Ortsgegebenheiten günstigeren Bekämpfungsmöglichkeiten verfügbar ist, dann wird die Zielinformation von der ersterwähnten Mine 113, unter Sperrung ihrer Antriebseinrichtung 119, an jene günstiger positionierte Mine 113 übertragen, die dadurch gewissermaßen einen Kommandoauftrag erhält, obgleich sie vielleicht aufgrund ihrer Geländeumgebung gar nicht so eindeutige und günstige Zielinformationen selbst ermitteln konnte. Außerdem ermöglicht es die Richtungsinformation 133, eindeutiger als über die bloße Entfernungs- und Bewegungs-Auswertung zwischen unterschiedlichen Zielobjekten 117 zu unterscheiden, die im Sperrgebiet 111 gleichzeitig erfaßt werden und deshalb unterschiedlichen Minen zur Abwehr zuzuweisen sind.

Noch präziser als mittels der kleinflächigen Antennengruppe 122 sind Peilergebnisse einer akustischen Peilbasis von wenigstens drei Mikrophonen 127, die an der Peripherie des Startgerätes 115 angeordnet sind, oder die zum Aufspannen einer noch größeren Basis in radialen Abstand davon ausfahrbar sind. Außerdem hat die akustische Peilung der Richtung von der Mine 113 zum Zielobjekt 117 gegenüber der aktiven Funkpeilung den Vorteil der geringen Verratswahrscheinlichkeit eines passiven Peilsystems. In diesem wird also in als solcher bekannter Weise der Zeitunterschied des Empfangs korrelativ gefilterter akustischer Ereignisse gemessen, nämlich des vom Zielobjekt 117 ausgehenden Schallspektrums 129. Je größer der in einer Laufzeitschaltung 131 ermittelte Zeitunterschied des Empfangs desselben Ereignisses ist, desto größer ist der Ablage-Peilwinkel gegenüber der konstruktiv gegebenen Mittelsenkrechten auf die Verbindung zwischen den beiden gerade abgefragten Mikrophone 127. Mit dieser Richtungspeilung kann dann in der Sensoreinrichtung 110 eine vom NLOS-Radar 125 gelieferte Zielentfernungsinformation 135 verknüpft werden, um eine vektorielle Mehrzielauflösung für die wirkoptimierte Zuordnung einer hinsichtlich ihres Wirkkörpers 121 noch funktionsbereiten Mine 113 zu erzielen. Wenn gemäß der bevorzugten apparativen Auslegung die Sensoreinrichtung 110 auch noch nach dem Start des Wirkkörpers 121 funktionsbereit bleibt, entsteht keine Überwachungs-Lücke im Sperrgebiet 111 und erübrigt sich der Einsatz übergeordneter Kommandostationen für eine Protokollierung des jeweiligen Minenzustandes und für die Zielzuweisung zu noch funktionsbereiten Minen 113.

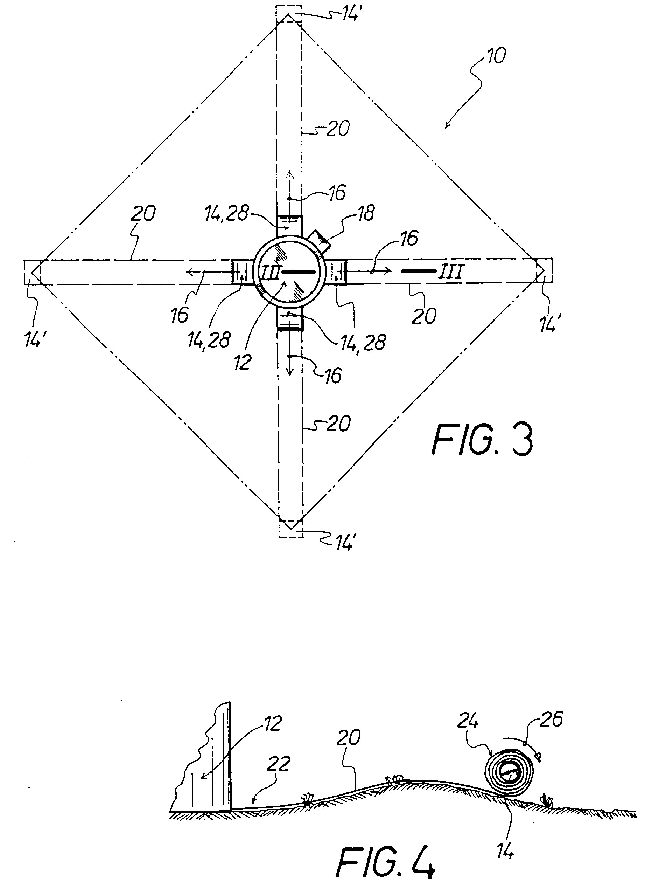

Zur näheren Erläuterung der akustischen Peilbasis zeigt Fig. 3 schematisch eine Sensoreinrichtung 10 mit vier Mikrofonen, die zur Erzielung einer im Vergleich zur Basis des Wirkkörpers 12 großen Basiskonfiguration vom Wirkkörper 12 beabstandbar sind, was durch die Pfeile 16 angedeutet ist. Ein fünftes Mikrofon 18 ist am Wirkkörper 12 vorgesehen.

Die Mikrofone 14 sind mit dem Wirkkörper 12 permanent derart verbunden, daß der Abstand der Mikrofone 14 vom Wirkkörper 12 in der aktiven Betriebsstellung der Sensoreinrichtung 10, in welcher die Mikrofone mit der Bezugsziffer 14' bezeichnet sind, zum Wirkkörper 12 und der Abstand zwischen den Mikrofonen 14' festgelegt ist.

Die vier Mikrofone 14 sind vom Wirkkörper 12 in Umfangrichtung gleichmäßig beabstandbar, so daß es aus jeder Richtung zumindest annähernd gleichgut möglich ist, ein zu bekämpfendes Ziel zu detektieren. Nur wenn das Ziel mit zwei Mikrofonen 14' fluchtet, ist es mit diesen beiden Mikrofonen 14' nicht möglich, das Ziel zu detektieren.

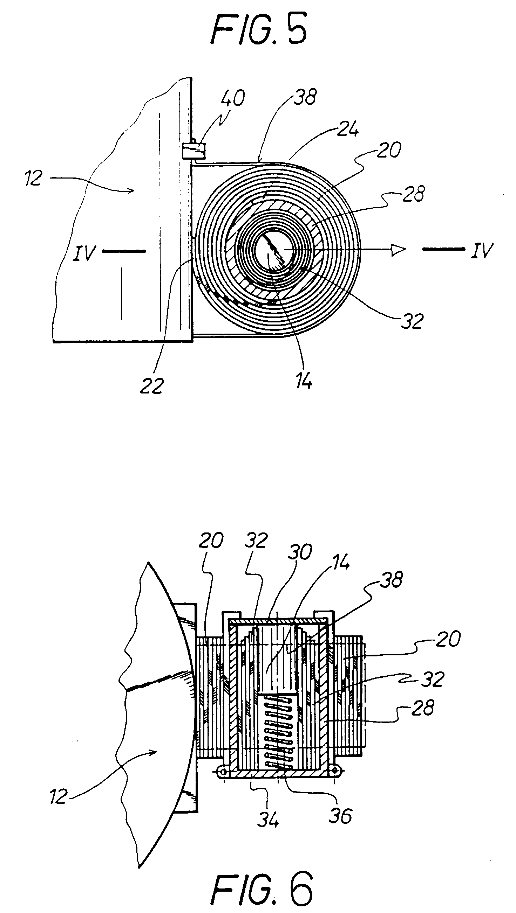

Figur 4 zeigt in einer Seitenansicht abschnittsweise einen Wirkkörper 12 mit einem vom Wirkkörper weg sich aufrollenden, d. h. radial wegstehenden Federstahlband 20, das mit seinem einen Endabschnitt 22 am Wirkkörper 12 befestigt ist, und dessen zweiter Endabschnitt 24 noch mit einigen Windungen um ein zugehöriges Mikrofon 14 herumgewunden ist. Das um das Mikrofon 14 herumgewundene Federstahlband 20 ist derart vorgespannt, daß es sich zu gegebener Zeit in Richtung des Pfeiles 26 vom Mikrofon 14 abwickelt, wodurch dieses vom Wirkkörper 12 passend beabstandet wird.

Die Figuren 5 und 6 zeigen in einem anderen Maßstab eines der Mikrofone 14 in einem zugehörigen Gehäuse 28. Das Gehäuse 28 ist in der Lauerstellung des Wirkkörpers 12 durch einen Deckel 30 verschlossen. Das Mikrofon 14 ist mit dem Gehäuse 28 mittels einer teleskopartig verlängerbaren Einrichtung 32 verbunden. Zwischen dem Mikrofon 14 und dem Gehäuse 28 bzw. dem Boden 34 des Gehäuses 28 ist ein Antriebselement 36 vorgesehen, bei dem es sich beispielsweise um eine Schraubendruckfeder, um ein pyrotechnisches Kraftelement o. dgl. handeln kann. Mit Hilfe des Antriebselementes 36 kann das Mikrofon 14 bei geöffnetem Deckel aus dem Gehäuse 28 herausbewegt werden. Das ist jedoch erst dann möglich, wenn das Mikrofon 14 mit dem Gehäuse 28 durch Abrollen des Federstahlbandes 20 vom Wirkkörper 12 beabstandet ist. Zu diesem Zweck ist das Federstahlband 20 mit seinem einen Endabschnitt am Wirkkörper 12 und mit seinem zweiten Endabschnitt 24 am Gehäuse 28 befestigt, in welchem sich das Mikrofon 14 mit der teleskopartig verlängerbaren Einrichtung 32 befindet. Mittels einer Ver- bzw. Entriegelungseinrichtung 38 verbleibt das um das Gehäuse 28 herumgewundene Federstahlband 20 in der inaktiven Stellung, bis die Ver- bzw. Entriegelungseinrichtung 38 mit Hilfe einer Freigabeeinrichtung 40 freigegeben wird, so daß sich zuerst das Federstahlband 20 vom Wirkkörper 12 weg abwickeln kann, wonach der Deckel 30 vom Gehäuse 28 freigegeben und das Mikrofon 14 mit Hilfe des Antriebselementes 36 aus dem Gehäuse 20 herausbewegt wird.

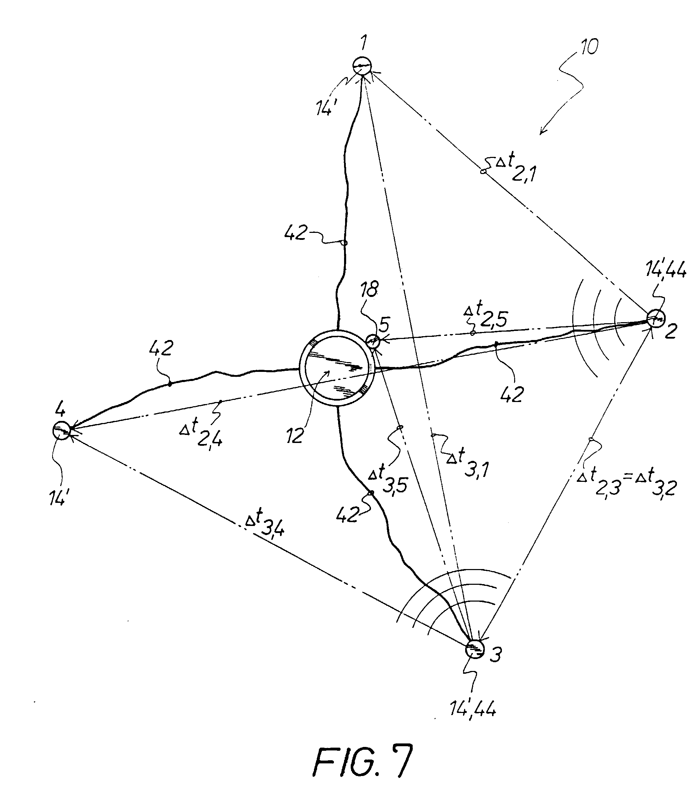

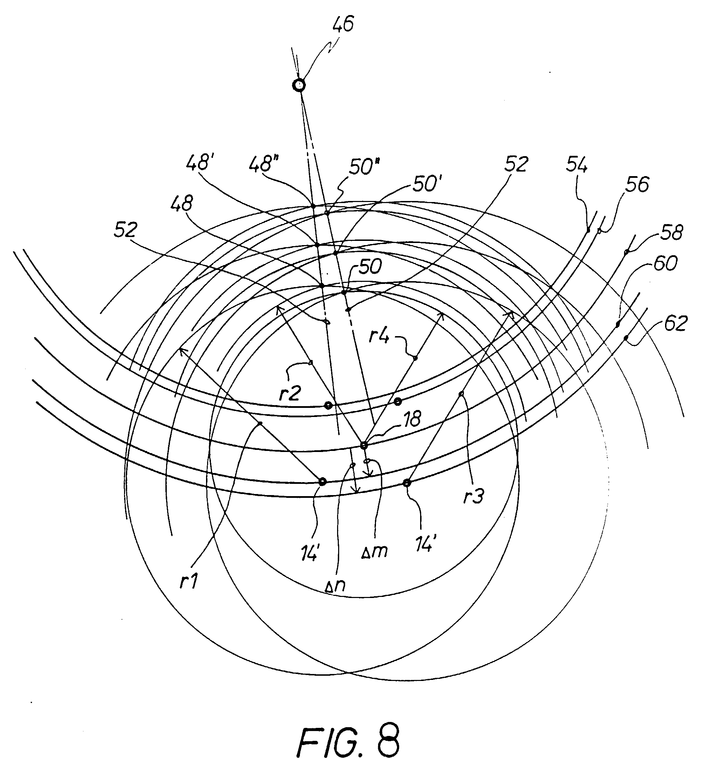

Figur 7 zeigt eine Ausbildung der Sensoreinrichtung 10, bei welchem vier Mikrofone 14' vom Wirkkörper 12 quasi wahllos beabstandet sind, was durch Fesselleinen 42 bzw. Kabel angedeutet ist. Ein fünftes Mikrofon 18 ist am Wirkkörper 12 vorgesehen. Die vier vom Wirkkörper 12 beabstandeten Mikrofone 14' sind mit Ziffern 1 bis 4 bezeichnet, während das fünfte Mikrofon 18 am Wirkkörper 12 mit der Ziffer 5 bezeichnet ist. Das zweite und dritte Mikrofon 14' sind jeweils mit einer Schallsendeeinrichtung 44 ausgebildet, so daß es mit Hilfe der Mikrofone 14' und mit Hilfe des Mikrofones 18 möglich ist, Schall-Laufzeiten t_{i,k} festzustellen, und aus diesen Schall-Laufzeiten t_{i,k} die Abstände zwischen den Mikrofonen 14' untereinander und die Abstände zwischen den Mikrofonen 14' und dem am Wirkkörper 12 vorgesehene Mikrofon 18 durch Produktbildung aus der entsprechenden Laufzeit t_{i,k} und der Schallgeschwindigkeit zu berechnen. Auf diese Weise ergibt sich also ein autonomes akustisches System zur Ortsvektorbestimmung. Wenn die relativ große Basiskonfiguration der Mikrofone 14' in bezug auf den Wirkkörper 12 autonom festgestellt ist, ist es relativ genau möglich, ein Ziel 46 mit Hilfe mindestens zweier Mikrofone 14' und des am Wirkkörper vorgesehenen Mikrofones 18 zu bestimmen, was in Figur 8 durch einige zeitlich wachsende, zu den entsprechenden Mikrofonen 14' bzw. 18 konzentrische Kreise angedeutet ist. Hierbei ist der Radius r1 um den Betrag n größer als der Radius r2 ausgehend vom Mikrofon 18, wobei n dem radialen Abstand zwischen dem Mikrofon 18 und dem linken Mikrofon 14' in bezug auf das Ziel 46 entspricht. Der vom rechten Mikrofon 14' ausgehende Radius r3 ist um den Betrag m größer als der vom Mikrofon 18 ausgehende Radius r4. Die Kreise mit den Radien r1 und r2 schneiden sich in einem Punkt 48 und die Kreise mit den Radien r3 und r4 schneiden sich in einem Punkt 50. Die sich zeitlich vergrößernden Radien r1 und r2 schneiden sich jeweils in Punkten 48, 48', 48'', ... und die sich zeitlich entsprechend vergrößernden Radien r3 und r4 schneiden sich in Punkten 50, 50', 50'', ..., die auf Hyperbelästen bzw. näherungsweise auf den Asymptoten der besagten Hyperbeläste liegen und sich folglich im Ziel 46 schneiden. Durch die Punkte 48, 48', 48'', ... bzw. 50, 50', 50'', ... soll angedeutet werden, daß die Mikrofone 14' bzw. das Mikrofon 18 in einem bestimmten Zeittakt wirksam sind. Durch die entsprechenden beiden Mikrofone 14' und das Mikrofon 18 sind zwei sich im Ziel 46 schneidende Ziellinien 52 festgelegt. Kommen auch noch die beiden anderen Mikrofone entsprechend zur Anwendung, so ergeben sich wenigstens zwei weitere Ziellinien zur noch genaueren Erfassung bzw. Detektion des Zieles 46. Durch eine erste grobe Erkennung der Richtung eines durch ein Ziel 46 bewirkten Schallereignisses, das in Figur 6 durch die Schall-Linien 54, 56, 58, 60 und 62 angedeutet ist, welche durch die entsprechenden Mikrofone 14' bzw. 18 hindurch verlaufen, ist es möglich, eine geeignete Mikrofon-Verknüpfung und Auswertestrategie festzulegen, um dann mit Hilfe der geeignet positionierten Mikrofone 14' eine genauere Zieldetektion vorzunehmen.

Die erfindungsgemäße Sensoreinrichtung 10 erkennt also in einem ersten Detektionsschritt die grobe Richtung eines Zieles 46, d. h. eines Schallereignisses, und ist dann dazu in der Lage, aufgrund dieser ersten Informationen eine geeignete Verknüpfung von Mikrofonen 14, 18 und eine passende Auswertestrategie festzulegen. Bei Ausfall eines Mikrofones ist es in vorteilhafter Weise möglich, eine autonome Kompensation dieses Mikrofonausfalles vorzunehmen bwz. eine entsprechende Mikrofon-Konfiguration zur Gewährleistung der Funktionalität der Sensoreinrichtung 10 vorzunehmen. Eine nur ungenaue Zielbestimmung ist möglich, wenn zwei Mikrofone bezogen auf das Ziel 46 in einem kleinen Raumwinkel liegen, weil sich dann die Schnittpunkte aus den zugehörigen Kreisen, fast nur tangieren. Der Schnittpunkt dieser beiden sich fast nur tangierenden Kreise hat also einen sehr großen Unschärfebereich. Das bedingt einen großen Peilfehler. Bei der Selbstorganisation der Sensoreinrichtung werden die zuletzt genannten Aspekte berücksichtigt, d. h. die Einrichtung wird u. a. so ausgelegt, daß mindestens zwei Ziel-Peilungen erhalten werden, deren Peilrichtungsgeraden 52 miteinander einen möglichst großen Winkel einschließen.

Wenn aber bei Zielannäherung der Wecksensor 112 die Sensoreinrichtung 110 aktiviert, wird das Radar 125 in Betrieb gesetzt, um über eine Sende-Empfangs-Weiche 137 und eine Rohdaten-Verarbeitungsschaltung 139 im Vergleich zur Umgebungsinformation aus einem Speicher 141 die Entfernungsinformation 135 zum potentiellen Zielobjekt 117 zu gewinnen. Bei Erfassung mehrerer Zielobjekte 117 wird mittels eines Mehrziel-Extraktors 143 ein in bezug auf diese Mine 113 besonders günstig positioniertes Zielobjekt 117 zur Analyse in Klassifikatoren 145 ausgewählt, die außerdem mit der Richtungsinformation 133 der akustischen Peilbasis gespeist werden. Ausgabeeinheiten 147 liefern für die bestätigten Zielobjekte 117 aufbereitete Richtungs-und Entfernungsinformationen an eine Selektionsschaltung 149, in der bei mehreren gleichzeitig erfaßten Zielobjekten 117 die nach Richtung und Entfernung günstigste Positionierung eines anzugreifenden Zielobjektes 117 bestimmt wird, um dann in einem Extrapolator 151 dessen voraussichtlichen Bewegungsgrößen abzuschätzen und danach in einer Zündschaltung 153 den optimalen Zeitpunkt für die Freigabe der Wirkkörper-Antriebseinrichtung 119 zu bestimmen, die bereits vom annäherungsabhängig arbeitenden Wecksensor 112 vorbereitet wurde. Sollte jedoch keine optimale Bekämpfungsgegebenheit vorliegen und eine andere funktionsbereite Mine 113 verfügbar sein, nämlich noch von der Antriebseinrichtung 119 ein Bereitschaftssignal 159 an die Sensoreinrichtung 110 liefern, dann erhält jene den Bekämpfungsauftrag. Die vorliegend betrachtete Sensoreinrichtung 110 wird wieder abgeschaltet, bis erneut der Wecksensor 112 anspricht oder aber eine interne Zeitschaltung 155 das NLOS-Radar 125 zu erneuter Umgebungs-Adaption für das Auffrischen des Inhalts des Umgebungsspeichers 141 vorübergehend einschaltet.

## Patentansprüche

1. Sensoreinrichtung (110), insbesondere für eine Land-Mine (113) gegen Boden- und Luft-Zielobjekte (117), mit wenigstens einer in niedriger Höhe über Grund aufstellbaren Antenne (122) zum ungerichteten Abstrahlen von elektromagnetischer Energie und zum Aufnehmen von reflektierter Energie,
**dadurch gekennzeichnet,**
daß die Antenne (122) eine Bodenwelle abstrahlt und als NLOS-Radar (125) die nicht über eine Ziel-Sichtverbindung am Ziel reflektierte Bodenwellen-Energie zum Speisen eines entfernungsabhängig arbeitenden Mehrziel-Extraktors (143) aufnimmt, und daß zusätzlich eine Peilbasis zum Gewinnen einer Richtungsinformation (133) von der Sensoreinrichtung (110) zu Zielobjekten (117, 46) vorgesehen ist.

2. Sensoreinrichtung nach Anspruch 1,
dadurch gekennzeichnet,
daß mehrere umschaltbare Hochfrequenz-Antennen (122), als Zielrichtungs-Peilbasis und ggf. für eine Zielecho-Dopplerauswertung, vorgesehen sind.

3. Sensoreinrichtung nach einem der vorangehenden Ansprüche,
dadurch gekennzeichnet,
daß ein dem Radar (125) nachgeschalteter Speicher (141) periodisch mit sensorisch gewonnenen Umfeld-Informationen aufgefrischt wird.

4. Sensoreinrichtung nach einem der vorangehenden Ansprüche,
dadurch gekennzeichnet,
daß ihre Radar-Antenne (122) zugleich zur drahtlosen Nachrichtenverbindung zu anderen Minen (113) ausgelegt ist, deren Sensoreinrichtungen (110) auch nach Start ihrer Wirkkörper (121, 12) zur Sperrgebiets-Überwachung wirksam bleiben.

5. Sensoreinrichtung nach einem der vorangehenden Ansprüche,
dadurch gekennzeichnet,
daß mehrere Mikrofone (127, 14, 18) als Zielrichtungs-Peilbasis vorgesehen sind.

6. Sensoreinrichtung nach Anspruch 5,
dadurch gekennzeichnet,
daß der Wirkkörper (12) mit mindestens drei Mikrofonen (14, 18) versehen ist, die zur Erzielung einer im Vergleich zur Basis des Wirkkörpers (12) relativ großen Basiskonfiguration vom Wirkkörper (12) beabstandbar sind, wobei eines der Mikrofone (18) fest am Wirkkörper (12) vorgesehen sein kann, aber auch die restlichen Mikrofone (14) mit dem Wirkkörper verbunden bleiben.

7. Sensoreinrichtung nach Anspruch 5,
dadurch gekennzeichnet,
daß jedes vom Wirkkörper (12) beabstandbare Mikrofon (14) an einer teleskopartig verlängerbaren Einrichtung (32) angeordnet und mittels eines Antriebselementes (36) fortbewegbar ist.

8. Sensoreinrichtung insbesondere nach Anspruch 1,
dadurch gekennzeichnet,
daß die voneinander beabstandeten Mikrofone (14) selbst zur Bestimmung des gegenseitigen Abstandes und des Abstandes vom Wirkkörper (12) vorgesehen sind.

9. Sensoreinrichtung nach einem der vorhergehenden Ansprüche,
dadurch gekennzeichnet,
daß die zur Erkennung der Richtung eines durch ein Ziel (46) bewirkten Schallereignisses vorgesehene Sensoreinrichtung (19) zur Festlegung einer gegebenen Mikrofon-Verknüpfung und Auswertestrategie dient.

10. Sensoreinrichtung nach einem der vorangehenden Ansprüche,
dadurch gekennzeichnet,
daß eine Antriebseinrichtung (119) zum Start des Wirkkörpers (121) für die Abwehr eines erfaßten Zielobjektes (117) von dem Wecksensor (112) nur vorbereitet und erst initiiert wird, wenn ein Zielbewegungs-Extrapolator (151) aus aktiv ermittelten Entfernungsinformationen und passiv ermittelten Richtungsinformationen eines ausgewählten Zielobjektes (117) feststellt, daß günstige Bekämpfungsgegebenheiten von einer noch funktionsbereiten Wirkkörper-Antriebseinrichtung (119) gegeben sind.

## Claims

1. Sensory device (110), in particular for a land mine (113) against ground and air target objects (117), having at least one aerial (122) to be set up at a low level above ground for the omni-directional radiating of electromagnetic energy and for picking up reflected energy,
characterized in that
the aerial (122) emits a ground wave and as NLOS radar (125) picks up the ground wave energy, not reflected by way of a target-sighting contact with the target, for supplying a multi-target extractor (143) which operates dependent on distance,
and in that in addition a direction-finder is provided for the obtaining of an item of directional information (133) by the sensory device (110) in respect of the target objects (117, 46).

2. Sensory device according to Claim 1,
characterized in that
several switchable high-frequency aerials (122) are provided as target direction-finders and possibly for a target echo Doppler evaluation.

3. Sensory device according to one of the preceding claims,
characterized in that
a storage unit (141) connected after the radar (125) is periodically boosted with sensorily obtained field information.

4. Sensory device according to one of the preceding claims,
characterized in that
its radar aerial (122) is at the same time designed for wireless communication with other mines (113), whose sensory devices (110) remain active for the surveillance of the prohibited area, even after launching of their active elements (121, 12).

5. Sensory device according to one of the preceding claims,
characterized in that
several microphones (127, 14, 18) are provided as target direction-finders.

6. Sensory device according to Claim 5,
characterized in that
the active element (12) is provided with at least three microphones (14, 18), which can be located at a distance from the active element (12) in order to achieve a base configuration which is relatively large in comparison with the base of the active element (12), whereby one of the microphones (18) can be provided fixed to the active element (12), whilst the remaining microphones (14) also remain connected with the active element.

7. Sensory device according to Claim 5,
characterized in that
each microphone (14) being at a distance from the active element (12) is disposed on a telescopically extendible device (32) and can be moved away by means of a drive element (36).

8. Sensory device in particular according to Claim 1,
characterized in that
the microphones (14) which are at a distance from one another are themselves provided for determining their mutual distance apart and the distance from the active element (12).

9. Sensory device according to one of the preceding claims,
characterized in that
the sensory device (19), provided for identifying the direction of a sound event produced by a target (46), serves to establish a given microphone linkage and evaluation strategy.

10. Sensory device according to one of the preceding claims,
characterized in that
a drive device (119) for launching the active element (121) for the defence of a detected target object (117) is only primed and initiated by the ringing sensor (112) when a target movement extrapolator (151) establishes from actively determined distance data and passively determined directional data of a selected target object (117) that the combat conditions are favourable for the drive device (119) of an active element which is still on operational stand-by.

## Revendications

1. Dispositif à capteur (110), en particulier pour une mine terrestre (113) contre des cibles terrestres et des cibles aériennes (117), avec au moins une antenne (122) à placer à faible hauteur au-dessus du sol, pour le rayonnement non dirigé d'énergie électromagnétique et pour l'absorption d'énergie réfléchie
caractérisé
en ce que l'antenne (122) émet une onde de sol et en tant que radar NLOS (125) absorbe l'énergie d'ondes de sol, réfléchie sur la cible, non par une liaison visuelle avec la cible, pour l'alimentation d'un extracteur multicible (143) fonctionnant en fonction de la distance, et en ce qu'en supplément il est prévu une base de relèvement pour l'obtention d'une information de direction (133) du dispositif à capteur (110) vers des cibles (117, 46).

2. Dispositif à capteur selon la revendication 1,
caractérisé
en ce que plusieurs antennes à haute fréquence (122) commutables sont prévues comme base de relèvement de direction de cible et éventuellement pour une interprétation Doppler d'écho de cible.

3. Dispositif à capteur selon l'une des revendications précédentes,
caractérisé
en ce qu'une mémoire (141), montée en aval du radar (125), est périodiquement rafraîchie avec des informations de champ ambiant obtenues par des capteurs.

4. Dispositif à capteur selon l'une des revendications précédentes,
caractérisé
en ce que son antenne radar (122) est conçue en même temps pour la liaison d'informations sans fil avec d'autres mines (113), dont les dispositifs à capteur (110) restent actifs même après lancement de leurs corps actifs (121, 12) pour le contrôle de la zone interdite.

5. Dispositif à capteur selon l'une des revendications précédentes,
caractérisé
en ce que plusieurs microphones (127, 14, 18) sont prévus en tant que base de relèvement de direction de cible.

6. Dispositif à capteur selon la revendication 5,
caractérisé
en ce que le corps actif (12) est pourvu d'au moins trois microphones (14, 18), qui pour l'obtention d'une configuration de base relativement grande par rapport à la base du corps actif (12), peuvent être éloignés du corps actif (12), l'un des microphones (18) pouvant être prévu fixe sur le corps actif (12), mais les microphones (14) restants restant aussi reliés au corps actif.

7. Dispositif à capteur selon la revendication 5,
caractérisé
en ce que chaque microphone (14), pouvant être éloigné du corps actif (12), est placé sur un dispositif (32) pouvant être allongé de manière télescopique et peut être éloigné au moyen d'un élément d'entraînement (36).

8. Dispositif à capteur en particulier selon la revendication 1,
caractérisé
en ce que les microphones (14) espacés les uns des autres sont prévus eux-mêmes pour la détermination de la distance réciproque et de la distance par rapport au corps actif (12).

9. Dispositif à capteur selon l'une des revendications précédentes,
caractérisé
en ce que le dispositif à capteur (18) prévu pour la détection de la direction d'un phénomène acoustique provoqué par une cible (46), sert à la définition d'une combinaison donnée de microphones et d'une stratégie d'exploitation.

10. Dispositif à capteur selon l'une des revendications précédentes,
caractérisé
en ce qu'un dispositif d'entraînement (119) pour le lancement du corps actif (121) pour la défense d'une cible (117) détectée n'est préparé et initialisé par le capteur de veille (112), que si un extrapolateur de mouvement de cible (151) constate, à partir d'informations de distance déterminées activement et d'informations de direction déterminées passivement d'une cible (117) choisie, que des conditions favorables de combat sont données par un dispositif d'entraînement de corps actif (119) encore prêt à fonctionner.
